# EUROPEAN PATENT SPECIFICATION

(11) **EP 1 620 292 B1**
(45) Date of publication and mention of the grant of the patent: **21.03.2007**
(21) Application number: 04709515.3
(22) Date of filing: 09.02.2004
(51) Int. Cl.: B60R 21/239, B60R 21/20

(54) **AIRBAG MODULE WITH CONTROLLED VENTING OF INFLATION GAS**
AIRBAG-MODUL MIT GESTEUERTER ENTLÜFTUNG VON AUFBLASGAS
MODULE D'AIRBAG A EVACUATION CONTREE DE GAZ DE GONFLEMENT

(30) Priority: 16.04.2003 US 414101
(43) Date of publication of application: 01.02.2006
(73) Proprietor: KEY SAFETY SYSTEMS, INC., Sterling Heights, MI 48314 (US)
(72) Inventor: FORD, Brian, Mt. Clemens, MI 48043 (US)
(74) Representative: Gislon, Gabriele
(86) International application number: PCT/US2004/003868
(87) International publication number: WO 2004/094201

(56) References cited:
- EP-A- 1 590 211
- DE-C- 19 952 967
- US-A- 5 853 192
- US-A1- 2001 035 638
- US-A1- 2001 038 201
- US-A1- 2002 005 142
- US-A1- 2002 043 790
- US-B1- 6 213 502

## Description

The present invention relates to an airbag module and an actuator for selectively diverting inflation gases away from the interior of an airbag.

Airbag modules comprise an airbag and an airbag inflator. When triggered by a crash detection system, the airbag inflator provides gas to inflate the airbag. The inflated airbag then serves as a cushion against injury for a vehicle occupant.

The location of the vehicle occupant with respect to the airbag may affect the effectiveness of the airbag as a cushion. If the vehicle occupant is too close to the airbag, full inflation of the airbag may result in less than optimal cushioning. It is desirable to inflate the airbag to less than total capacity when the vehicle occupant is too close to the airbag.

Technology exists that can detect the location of the vehicle occupant. With this known technology it is possible to inflate the airbag to less than total capacity if the vehicle occupant is too close to the airbag. A dual-stage inflator may inflate the airbag in this way with a first stage that partially inflates the airbag, while a second stage, if triggered, fills the airbag to total capacity. A dual-stage inflator is generally more expensive than a single-stage inflator. It would be desirable to provide a virtually infinite variety of inflation levels. As an alternative to a dual-stage inflator, the present invention provides an airbag module that vents inflation gas away from the airbag when the airbag has reached an appropriate inflation level.

US-A-2001/0038201 as the closest prior art discloses an airbag module, wherein the airbag housing has a flap that can be bent outside the housing under the pressure of the gases generated by the inflator to reduce the pressure within the airbag. A piston is provided, that can be actuated by a propellant to avoid the flap from bending outside the housing and to thus direct the full amount of gases to the airbag.

US-A-2001/035638 discloses a flap valve that comprises one or two valve plates held in closed position against gases from the inflator by at least one strip element. A pressure generator provides, when required, pressure for deforming the strip element and cause the flaps to open.

EP-A-1590211 - published as WO 2004/071820 A1 on 26.8.2004, a document relevant according to art. 54(3) only - discloses an airbag module wherein the flap is actuated by an igniter assembly possibly including a piston housed in the propeller housing, directly mounted on the airbag housing.

The airbag module of the present invention is defined by the features of claim 1 and comprises an airbag inflatable through an opening in the airbag. An inflator generates an inflation gas that passes through the opening in the airbag during deployment. Unlike known systems, the invention uses a flap that opens and closes the opening in the airbag. Typically, the flap is held in the open position to permit inflation gas to pass through the airbag during airbag deployment When the airbag has reached an appropriate inflation level, a propellant is ignited and generates gas that moves the flap from the open position to the closed position. However, when ignited the propellant may emit a flash of light and discharge residual particles into the passenger compartment. While this light and these particles are by no means dangerous, during a vehicle crash they may alarm a vehicle occupant. A need therefore exists for an airbag module and actuator that suppresses these undesirable effects. To prevent both light and residual particles from escaping into the passenger compartment, a hollow body covers the space where the propellant reactions. The hollow body may comprise a hollow body that surrounds the discharge space. The propellant may be located in hollow body. By surrounding the propellant reaction, the hollow body shields the passenger compartment from light and particles generated by the propellant. A piston slides within the hollow body to increase the force of the propellant and collide with the flap to close the opening in the airbag.

The features and advantages of this invention will become apparent from the following detailed description and drawings of the currently preferred embodiment.
Figure 1 Illustrates airbag module with airbag, inflator, flap and actuator with the flap in an open position.

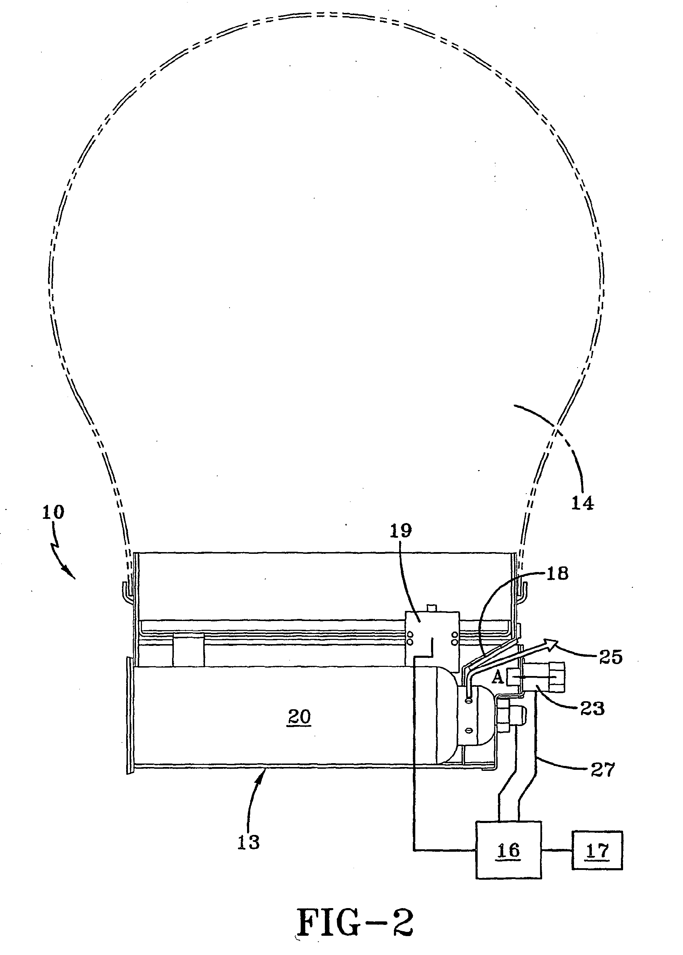

Figure 2 illustrates airbag module of Figure 1 with the flap in a closed position.
Figure 3 is a close up of the airbag module of Figures 1 and 2, highlighting actuator with piston in contact with the flap.
Figure 4 is a cross-sectional view of actuator in dormant position, showing propellant housing, piston, and hollow body.
Figure 5 illustrates the actuator of Figure 4 in actuated position.
Figure 6 is a perspective view of propellant housing of Figures 4 and 5.
Figure 7 is a perspective view of piston of Figures 4 and 5.
Figure 8 is a perspective view of lower housing of hollow body of Figures 4 and 5.
Figure 9 is a perspective view of upper housing of hollow body of Figures 4 and 5.

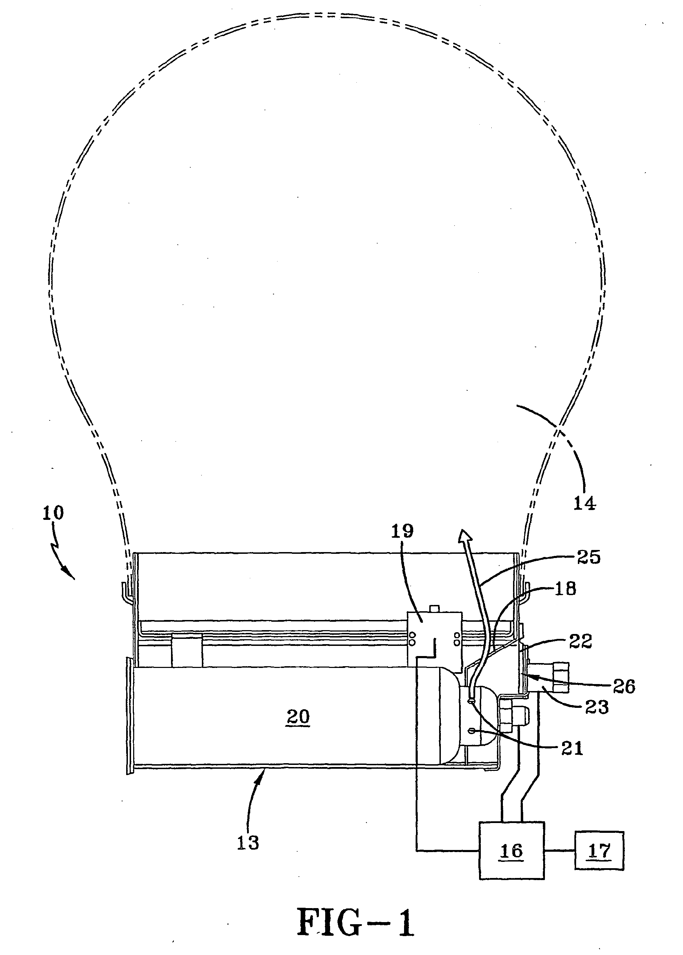

Figure 1 shows an airbag module 10 according to the present invention. The airbag module comprises an airbag 14 with an opening 18 in the airbag and an airbag inflator 20. The airbag inflator 20 and the airbag 14 are attached to an airbag housing 13. A crash sensor 17 communicates with a control unit 16, which instructs the airbag inflator 20 to provide inflation gas 25 and deploy the airbag 14 if the crash sensor 17 relays crash detection data that indicates a crash of a predetermined severity. During airbag deployment, the airbag inflator 20 inflates the airbag 14 with inflation gas 25 either stored gas or gas produced by a chemical or other physical reaction. The airbag inflator 20 has ports 21 that supply inflation gas 25 into the airbag 14 through the opening 18 in the airbag. As the airbag 14 inflates, a vehicle occupant position sensor 19 determines the position of a vehicle occupant relative to the airbag 14 and communicates this signal to the control unit 16. If the airbag 14 is under-inflated based on the position of the vehicle occupant, a flap 22 remains in a first position 26 (open position), permitting inflation gas 25 to continue to flow through the opening 18 into the airbag 14.

When the appropriate inflation level for the airbag 14 is reached based on the position of the vehicle occupant, the control unit 16 instructs an actuator 23 to ignite a propellant 34. The propellant 34 ignites and rapidly transforms into an expanding gas that causes the flap 22 to move in the direction of a second position 30 to cover the opening 18 in the airbag and deflect further inflation gas 25 away from airbag 14.

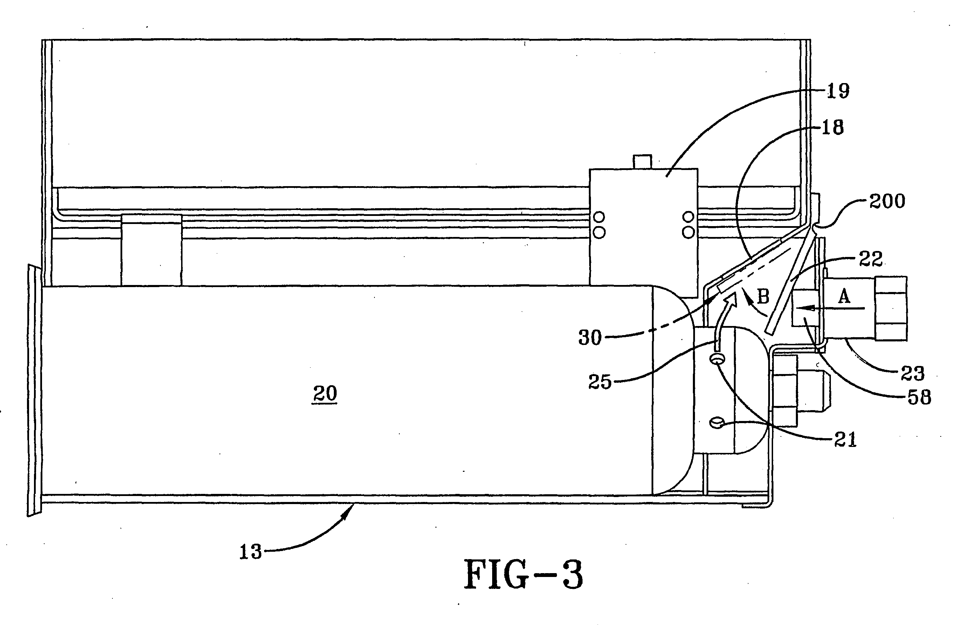

Figure 3 illustrates how the actuator 23 causes the flap 22 to move toward a second position 30. When the airbag 14 has reached an appropriate inflation level, the control unit 16 instructs the actuator 23 to propel a piston 58 in a direction indicted by an arrow A towards the flap 22. The piston 58 collides with the flap 22 imparting momentum to the flap 22 forcing it to bend at a groove 200 so that the bottom portion 202 of the flap can swing in the direction indicated by an arrow B towards a second position 30. Inflation gas 25 from the ports 21 of the inflator 20 may assist the flap 22 in moving toward the second position 30 as momentum of the flap 22 in the direction indicated by the arrow B carries the flap 22 into the path of the inflation gas 25.

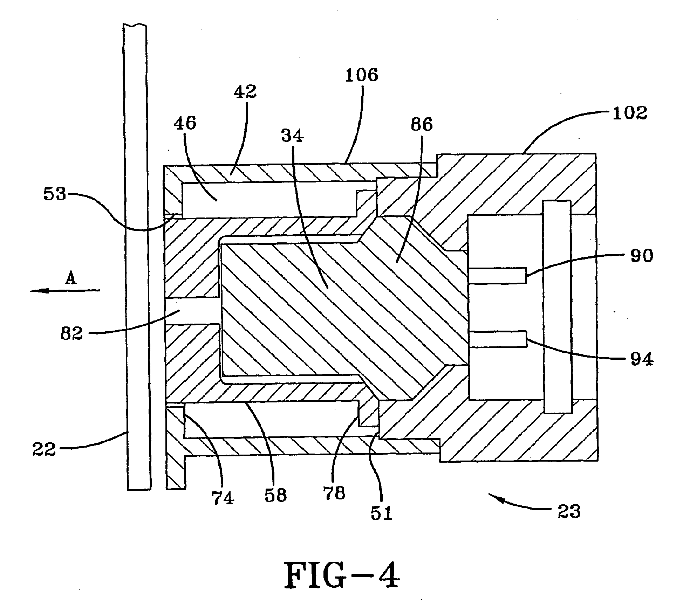

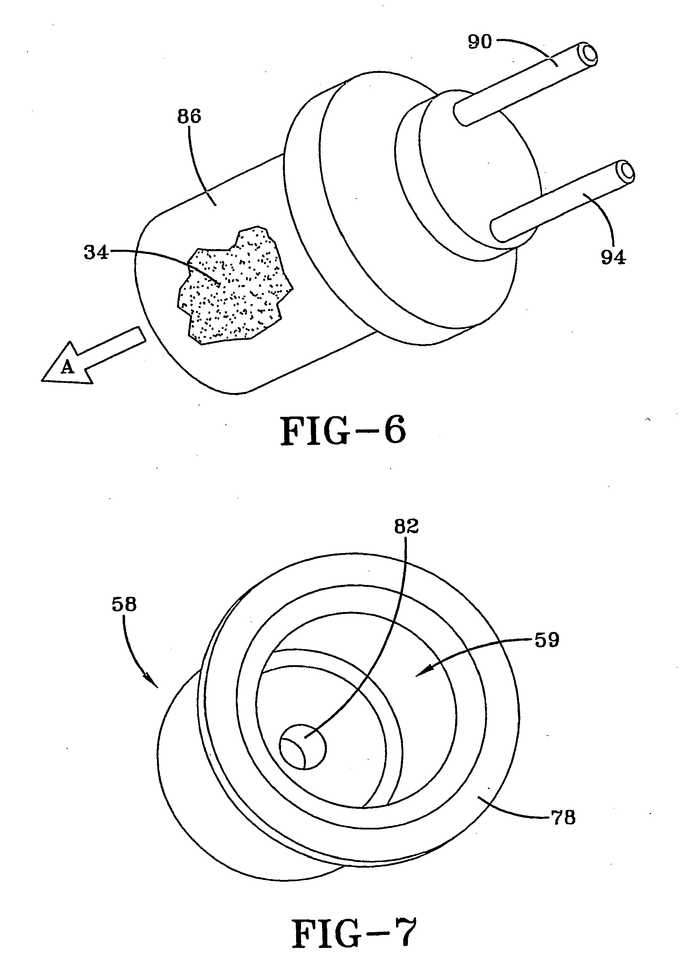

Figure 4 is a cross-sectional view of the actuator 23 relative to the flap 22 with the actuator 23 dormant. Here, the propellant 34 is contained within a propellant housing 86 that is a hollow cylinder storing the propellant 34. Figure 6 is a perspective view of the propellant housing 86. In Figure 4 the propellant housing 86 is itself supported within a hollow cylinder of a hollow body 42, which has a hollow body interior 46 that is a cylindrical cavity. The hollow body 42 has a first opening 51 and second opening 53 therein. The first opening 51 receives the propellant housing 86 as well as the upper housing 102 while the second opening 53 receives the piston 58.

The actuator 23 employs the hollow body 42 to shield a vehicle occupant from-light and particles released by the propellant 34 during actuation of the actuator 23 while still permitting the actuator 23 to move the flap 22 toward the second position 30. The hollow body 42 may comprise an upper housing 102 and a lower housing 106, although the hollow body 42 may be of a single piece design. The propellant housing 86 may be supported within the upper housing 102 by an interference fit. Figure 4 also shows the piston 58, also a hollow cylinder, resting on top of the propellant housing 86 and disposed within the lower housing 106 of the hollow body 42.

The propellant housing 86 has a first electrical contact 90 and a second electrical contact 94. The electrical contacts 90, 94 are in electrical conductive communication with the propellant 34 or an ignition charge (not shown) in proximity to the propellant 34. To actuate the actuator 23, the control unit 16 sends an electrical signal through a wiring harness 27 to the electrical contacts 90, 94, which ignites the propellant 34 or the ignition charge.

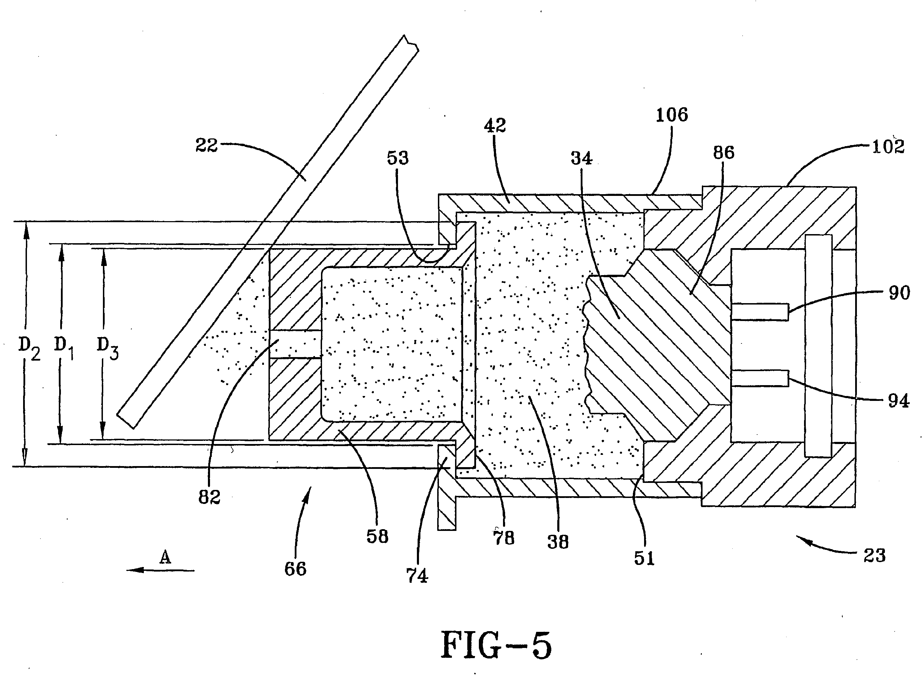

In Figure 5 when current is passed through the first and second electrical contacts 90, 94 the propellant 34 within the propellant housing 86 ignites, generating gas, light and residual particles within a discharge space 38 of the hollow body interior 46. The propellant housing 86 breaks open in this process. Because this reaction occurs within the hollow body interior 46 of the hollow body 42, the hollow body 42 prevents light and particles from escaping in any significant amount into a passenger compartment of a vehicle.

At the same time, without releasing this light and these particles, the actuator 23 can transfer pressure from the gas of propellant 34 to the flap 22. A piston 58 is free to slide within the hollow body 42 along the direction indicated by an arrow A. As pressure builds from the expansion of the gas generated by the propellant 34, the piston 58 moves along the direction indicated by the arrow A into the flap 22, imparting momentum to the flap 22 towards a second position 30.

To relieve pressure build-up within the hollow body interior 46, the piston 58 may also be provided with a vent 82, here a hole. The vent 82 is sufficiently small that insignificant amounts of light and particles from the hollow body 42 exit through the vent. Because of the position of the vent 82 on the piston 58, the flap 22 may hide light and redirect particles escaping from the vent 82.

To preventing particles and light from escaping into the passenger compartment, the actuator 23 has a feature that retains the piston 58 to the hollow body 42. In Figure 5 the hollow body 42 has a flange 74 that protrudes circumferentially around the hollow body interior 46 of the hollow body 42 around a second opening 53. The flange 74 provides a stop for a catch 78 of the piston 58 to prevent the piston 58 from ejecting entirely out of the hollow body 42 during actuation. When the actuator 23 is in an actuated position 66, the catch 78 is in contact with the flange 74. The piston 58 and the hollow body 42 are cylindrical. The piston 58 has a first piston diameter D2 and a second piston diameter D3. The second opening 53 has a hollow body diameter D1. The first piston diameter D2 is greater than the hollow body diameter D1 thereby preventing the piston 58 from extending beyond the catch 78. The second piston diameter D3 may pass through the second opening 53 because the second piston diameter D3 is less than the hollow body diameter D1. Thus, during actuation, a portion of the piston 58 is retained within the hollow body 42 while another portion extends through a second opening 53 into contact with the flap 22.

In Figure 7 the piston 58 has a vent 82, in this example a hole. The piston 58 is generally cylindrical and has a cavity 59 to receive a portion of the propellant housing 86. In Figure 5, the flange 78 extends circumferentially around a cavity 59 forming a skirt that retains the piston 58 to the hollow body 42 by contact with the flange 74.

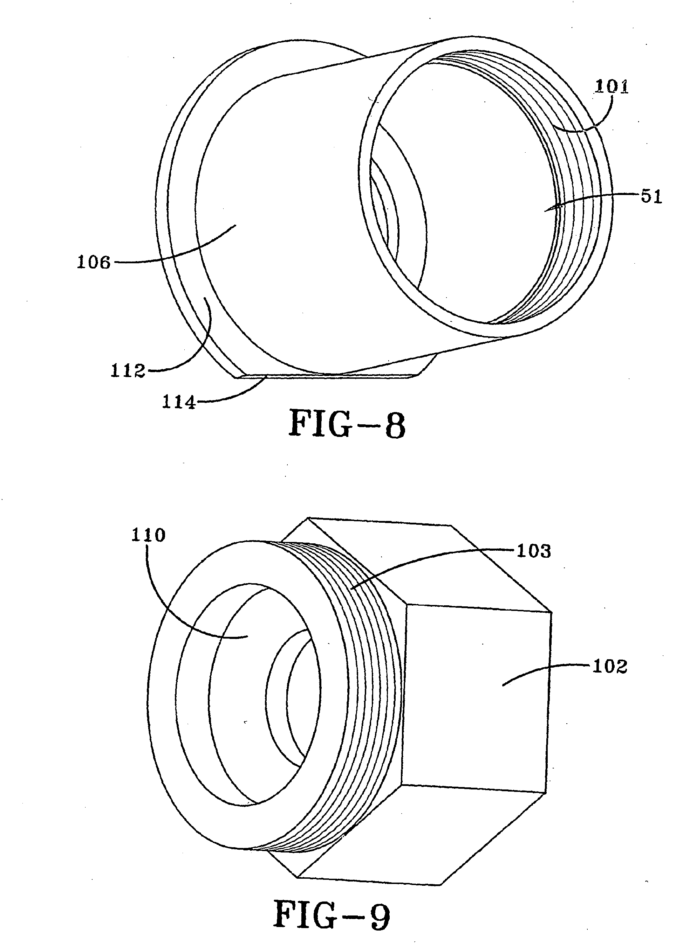

Figure 8 is a perspective view of a lower housing 106 of the hollow body 42 while Figure 9 is a perspective view of an upper housing 102 of the hollow body 42. As shown in these figures and noted previously, the upper housing 102 and lower housing 106 comprise generally cylindrical shapes. The upper housing 102 has a first opening 51 and a second opening 53 therein. The first opening 51 has a threaded portion 101 that receives a threaded portion 103 of the upper housing 102. A flange 112 attaches to the airbag housing 13 and thereby secures the actuator 23 to the airbag housing 13 upon ignition of the propellant 34. In addition, the propellant housing 86 rests on a support surface 110 of the upper housing 102 to also prevent the propellant housing 86 from moving relative to the airbag housing 13. The flange 112 is provided with a flat surface 114 that is in a specific location relative to the location of the electrical contacts 90, 94 to aid in the orienting of the actuator 23 to the wiring harness 27 connecting the control unit 16 to the actuator 23.

## Claims

1. An airbag module (10) comprising:
an airbag (14) inflatable through an opening (18) in the airbag;
an airbag inflator (20) for providing an inflation gas through the opening (18) in the airbag (14);
an airbag housing (13) to which the airbag inflator (20) and the airbag (14) are attached;
a flap (22) attached to the housing, the flap (22) being movable from a first position permitting inflation gas to flow through the opening (18) in the airbag (14) and a second position deflecting the inflation gas away from the opening (18) in the airbag (14); and
a propellant (34) capable of discharging into a discharge space (38), the propellant (34) moving the flap (22) between the first position and the second position when discharged; and a hollow body (42) at least partially covering the discharge space (38) ;
a piston (58) in the hollow body (42) that can slide in the hollow body, **characterised in that** the piston (58) has an actuated position following discharge of the propellant (34) into the discharge space (38) and a dormant position prior to the discharge of the propellant into the discharge space, at least a portion of the piston (58) protrudes further outside of the hollow body (42) in the actuated position than in the dormant position such that at least a portion of the piston (58) contacts the flap (22) in the actuated position imparting momentum to the flap to cause the flap (22) to move to the second position.

2. The airbag module (10) of Claim 2 wherein the propellant (34) is stored in the hollow body (42).

3. The airbag module (10) of either of Claims 1 or 2 wherein the hollow body (42) has a flange (74) in contact with a catch (78) on the piston (58) in the actuated position.

4. The airbag module (10) of any of Claims 1 - 3 including a vent (82) in communication with the hollow body (42).

5. The airbag module (10) of any of Claims 1 - 4 including a propellant housing (86) storing the propellant, the propellant housing (86) having a first electrical contact (90) and a second electrical contact (94) in communication with the propellant (34), the propellant housing (86) received in the hollow body (42).

6. The airbag module (10) of any of Claims 1 - 5 wherein the hollow body (42) has an opening having a hollow body diameter (D1) and the piston (58) has a first piston diameter (D2) and a second piston diameter (D3), wherein the first piston diameter (D2) is larger than the hollow body diameter (D1) and the second piston diameter (D3) is smaller than the hollow body diameter (D1).

## Patentansprüche

1. Airbagmodul (10), das Folgendes umfasst:
einen Airbag (14), der durch eine Öffnung (18) im Airbag aufgeblasen werden kann,
eine Airbag-Aufblasvorrichtung (20) zum Zuführen eines Aufblasgases durch die Öffnung (18) im Airbag (14),
ein Airbaggehäuse (13), an dem die Airbag-Aufblasvorrichtung (20) und der Airbag (14) befestigt sind,
eine Klappe (22), die am Gehäuse befestigt ist, wobei die Klappe (22) bewegt werden kann von einer ersten Position, die es ermöglicht, dass Aufblasgas durch die Öffnung (18) im Airbag (14) strömt, und einer zweiten Position, die das Aufblasgas von der Öffnung (18) im Airbag (14) weg ablenkt, und
ein Treibmittel (34), das in der Lage ist, in einen Ausströmraum (38) auszuströmen, wobei das Treibmittel (34) die Klappe (22) zwischen der ersten Position und der zweiten Position bewegt, wenn es ausströmt, und
einen Hohlkörper (42), der den Ausströmraum (38) wenigstens teilweise abdeckt,
einen Kolben (58) im Hohlkörper (42), der im Hohlkörper gleiten kann, **dadurch gekennzeichnet, dass** der Kolben (58) eine betätigte Position anschließend an das Ausströmen des Treibmittels (34) in den Ausströmraum (38) und eine Ruheposition vor dem Ausströmen des Treibmittels in den Ausströmraum hat, wobei wenigstens ein Abschnitt des Kolbens (58) in der betätigten Position weiter aus dem Hohlkörper (42) vorsteht als in der Ruheposition derart, dass wenigstens ein Abschnitt des Kolbens (58) in der betätigten Position die Klappe (22) berührt, was der Klappe einen Impuls verleiht, um zu bewirken, dass sich die Klappe (22) zur zweiten Position bewegt.

2. Airbagmodul (10) nach Anspruch 1, wobei das Treibmittel (34) im Hohlkörper (42) gespeichert wird.

3. Airbagmodul (10) nach einem der Ansprüche 1 oder 2, wobei der Hohlkörper (42) einen Flansch (74) hat, der sich in der betätigten Position in Berührung mit einer Sperre (78) am Kolben (58) befindet.

4. Airbagmodul (10) nach einem der Ansprüche 1 - 3, das eine Entlüftungsöffnung (82) in Verbindung mit dem Hohlkörper (42) einschließt.

5. Airbagmodul (10) nach einem der Ansprüche 1 - 4, das ein Treibmittelgehäuse (86), welches das Treibmittel speichert, einschließt, wobei das Treibmittelgehäuse (86) einen ersten elektrischen Kontakt (90) und einen zweiten elektrischen Kontakt (94) in Verbindung mit dem Treibmittel (34) hat, wobei das Treibmittelgehäuse (86) im Hohlkörper (42) aufgenommen wird.

6. Airbagmodul (10) nach einem der Ansprüche 1 - 5, wobei der Hohlkörper (42) eine Öffnung mit einem Hohlkörperdurchmesser (D1) hat und der Kolben (58) einen ersten Kolbendurchmesser (D2) und einen zweiten Kolbendurchmesser (D3) hat, wobei der erste Kolbendurchmesser (D2) größer ist als der Hohlkörperdurchmesser (D1) und der zweite Kolbendurchmesser (D3) kleiner ist als der Hohlkörperdurchmesser (D1).

## Revendications

1. Module de coussin d'air (10), comprenant:
un coussin d'air (14), pouvant être gonflé à travers une ouverture (18) dans le coussin d'air;
un dispositif de gonflement du coussin d'air (20) pour amener un gaz de gonflement à travers l'ouverture (18) dans le coussin d'air (14);
un boîtier du coussin d'air (13) sur lequel sont fixés le dispositif de gonflement du coussin d'air (20) et le coussin d'air (14);
un clapet (22) fixé sur le boîtier, le clapet (22) pouvant être déplacé d'une première position, permettant l'écoulement du gaz de gonflement à travers l'ouverture (18) dans le coussin d'air (14), et une deuxième position, déviant le gaz de gonflement à l'écart de l'ouverture (18) dans le coussin d'air (14); et
un agent propulsif (34) pouvant être déchargé dans un espace de décharge (38), l'agent propulsif (34) déplaçant le clapet (22) entre la première position et la deuxième position lors de la décharge; et
un corps creux (42), recouvrant au moins partiellement l'espace de décharge (38);
un piston (58) dans le corps creux (42), pouvant glisser dans le corps creux,
**caractérisé en ce que** le piston (58) comporte une position actionnée suivant la décharge de l'agent propulsif (34) dans l'espace de décharge (38) et une position de repos occupée avant la décharge de l'agent propulsif dans l'espace de décharge, au moins une partie du piston (58) débordant davantage vers l'extérieur du corps creux (42) dans la position actionnée que dans la position de repos, de sorte qu'au moins une partie du piston (58) contacte le clapet (22) dans la position actionnée, conférant un moment au clapet, pour entraîner le déplacement du clapet (22) vers la deuxième position.

2. Module de coussin d'air (10) selon la revendication 1, dans lequel l'agent propulsif (34) est stocké dans le corps creux (42).

3. Module de coussin d'air (10) selon la revendication 1 ou 2, dans lequel le corps creux (42) comporte une bride (74), en contact avec un cliquet (78) sur le piston (58) dans la position actionnée.

4. Module de coussin d'air (10) selon l'une quelconque des revendications 1 à 3, englobant un évent (82) en communication avec le corps creux (42).

5. Module de coussin d'air (10) selon l'une quelconque des revendications 1 à 4, englobant un boîtier de l'agent propulsif (86) stockant l'agent propulsif, le boîtier de l'agent propulsif (86) comportant un premier contact électrique (90) et un deuxième contact électrique (94), en communication avec l'agent propulsif (34), le boîtier de l'agent propulsif (86) étant reçu dans le corps creux (42).

6. Module de coussin d'air (10) selon l'une quelconque des revendications 1 à 5, dans lequel le corps creux (42) comporte une ouverture ayant un diamètre du corps creux (D1), le piston (58) ayant un premier diamètre de piston (D2) et un deuxième diamètre de piston (D3), le premier diamètre du piston (D2) étant supérieur au diamètre du corps creux (D1) et le deuxième diamètre de piston (D3) étant inférieur au diamètre du corps creux (D1).
